## Europäisches Patentamt

## European Patent Office

## Office européen des brevets

(11) Veröffentlichungsnummer: **0 245 803**
**A1**

(12) **EUROPÄISCHE PATENTANMELDUNG**

(21) Anmeldenummer: 87106745.0

(22) Anmeldetag: 08.05.87

(51) Int. Cl.³: **B 60 D 1/00**
**B 60 D 1/14**

(30) Priorität: 13.05.86 US 862857

(43) Veröffentlichungstag der Anmeldung:
19.11.87 Patentblatt 87/47

(84) Benannte Vertragsstaaten:
DE FR GB SE

(71) Anmelder: DEERE & COMPANY
1 John Deere Road
Moline Illinois 61265(US)

(72) Erfinder: Wisdom, James Noel
Route 4 Shady Lane
Beaver Dam Wisconsin 53916(US)

(74) Vertreter: Feldmann, Bernhard et al,
DEERE & COMPANY European Office, Patent Department
Steubenstrasse 36–42 Postfach 503
D-6800 Mannheim 1(DE)

(54) Anhängevorrichtung.

(57) Eine Anhängevorrichtung (30) für einen Gartenschlepper (10) besteht aus einem c-förmigen Bügel (32), der mit seinen beiden Schenkeln an den Rahmen (18) des Gartenschleppers zwischen einer Arbeitsstellung und einer Transportstellung verschwenkbar ist. Der Bügel (32) kann in beiden Stellungen mittels einer Arretierungsvorrichtung festgesetzt werden.

Fig. 2

EP 0 245 803 A1

Croydon Printing Company Ltd.

## Anhängevorrichtung

Die Erfindung bezieht sich auf eine Anhängevorrichtung für ein Fahrzeug, das mit einem hinteren, einzigen Laufrad und einem sich beiderseits des Laufrades erstreckenden Rahmen ausgerüstet ist, auf dem ein Gehäuse angeordnet ist.

Es ist bereits allgemein ein Gartenschlepper mit einer an der Rückseite des Gartenschleppers angeordneten Anhängevorrichtung bekannt, die zwischen einer Arbeitsstellung und einer Transportstellung verschwenkbar ist.

Aufgabe der Erfindung ist es jedoch, eine Kupplungsvorrichtung derart auszubilden, daß sie auch für Fahrzeuge mit einem einzigen hinteren, steuerbaren Laufrad einsetzbar ist, ohne daß die Manövrierfähigkeit des Schleppers beeinträchtigt wird. Diese Aufgabe ist dadurch gelöst worden, daß ein in etwa c-förmig ausgebildeter Bügel mit seinen beiden gegenüberliegenden Enden das Laufrad umgibt, gelenkig an den Rahmen angeschlossen und wahlweise zwischen einer abgesenkten und einer angehobenen Stellung verstellbar, sowie mittels einer Arretierungsvorrichtung gegen Verschwenken festsetzbar ist. Durch die vorteilhafte Ausbildung und Anordnung der Anhängevorrichtung in Verbindung mit dem c-förmigen Bügel läßt sich die Anhängevorrichtung ohne weiteres am hinteren Teil des Kraftfahrzeuges bzw. des Gartenschleppers anbringen, ohne daß dadurch die Verstellung des hinteren, einzigen Laufrades zur Fahrtrichtungsänderung beeinträchtigt wird, da die beiden Schenkel des c-förmigen Bügels das hintere Laufrad von außen her umgeben. Der Bügel dient ferner zur einfachen Aufnahme einer Kupplungsplatte an die weitere Anhängefahrzeuge angeschlossen werden können. Durch die Verwendung des Bügels läßt sich die Kupplungsplatte ohne weiteres am hinteren Ende des Schleppers anbringen, ohne hierbei mit dem hinteren Laufrad zu kollidieren. Die Anhängevorrichtung läßt sich auf einfache Weise mittels der Arretierungsvorrichtung in mindestens den beiden Stellungen festsetzen. In vorteilhafter Weise ist der mittlere Teil des Bügels an die Außenkontur des oberen Teils des Gehäuses des Gartenschleppers angepaßt, so daß in der angehobenen Stellung des Bügels der mittlere Teil gegen die Rückwand bzw. den gebogenen Teil der Rückwand des Gehäuses zur Anlage kommt. Hierdurch erhält man in der entlastenden Stellung bzw. in der Transportstellung des Bügels eine gute Festlegung des Bügels und somit eine ratterfreie Festsetzung, so daß hierdurch die Fahrgeräusche des Schleppers auf ein Minimum reduziert werden.

Im folgenden wird die Erfindung anhand von lediglich einen Ausführungsweg darstellenden Zeichnungen näher erläutert. Es zeigen:

Fig. 1 eine Seitenansicht eines Gartenschleppers mit einem an der Stirnseite angeschlossenen Mähwerk,

Fig. 2 den hinteren Teil des Gartenschleppers mit einer Anhängevorrichtung in abgesenkter Stellung,

Fig. 3 eine Draufsicht des hinteren Teils der Anhängevorrichtung,

Fig. 4 eine vergrößerte perspektivische Darstellung einer Arretierungsvorrichtung zur Festsetzung der Anhängevorrichtung.

In der Zeichnung ist mit 10 ein Gartenschlepper bezeichnet, der sich auf zwei vorderen Laufrädern 12 und einem hinteren, einzigen Laufrad 14 abstützt. Anstelle des in der Zeichnung dargestellten Gartenschleppers 10 kann auch ein Kraftfahrzeug eingesetzt werden. Das Kraftfahrzeug bzw. der Gartenschlepper weist ein Gehäuse 16 auf, das auf einem Rahmen 18 angeordnet ist und der den hinteren Teil bzw. die Antriebselemente des Gartenschleppers abdeckt. Das hintere
Ende des Gehäuses ist durch eine geformte Rückwand 20 gebildet, die im oberen Bereich bzw. an der Ecke des Gehäuses 16 abgerundet ist. An der Stirnseite des Kraftfahrzeuges bzw. des Gartenschleppers ist eine Mähwerksvorrichtung
22 angeschlossen. Das einzelne Laufrad 14 dient zur Steuerung des Gartenschleppers 10, wobei der Wendekreis des
Gartenschleppers bei dieser Anordnung null oder geradezu
null ist.

An der Rückseite des Gartenschleppers ist eine selbsttätige, in mindestens eine Transportstellung und in mindestens eine Arbeitsstellung verschwenkbare Anhängevorrichtung
30 angeordnet, die aus einem c-förmig ausgebildeten Bügel
32 besteht, deren beide gegenüberliegenden Enden mittels
zweier Gelenkbolzen 34 an den Rahmen vertikal schwenkbar
angeschlossen sind. Der mittlere Teil des Bügels 32 trägt
eine sich nach außen erstreckende Kupplungsplatte 36, und
ein jedes Ende des Bügels 32 ist mit einer
Arretierungsvorrichtung 38 ausgestattet.

Wie aus Fig. 4 hervorgeht, weist die Arretierungsvorrichtung 38 eine geschlitzte, u-förmig ausgebildete Halterung
40 auf, die an der Außenseite des Bügels 32 fest angeordnet ist. In der Halterung 40 ist ein Arretierungsbolzen 42
gegen die Wirkung einer Feder 44 verschiebbar angeordnet.
Wie aus Fig. 4 hervorgeht, drückt die Feder 44 den Arretierungsbolzen 42 in Richtung des Bügels 32. An den Arretierungsbolzen 42 ist ein Bügel 46 schwenkbar angeschlossen, der in einer in der Zeichnung nicht weiter dargestellten Bohrung des Arretierungsbolzens 42 aufgenommen sein
kann. Der Bügel 46 dient als Anschlag, wenn der Arretierungsbolzen 42 in eine im Bügel 32 und in dem Rahmen 18
vorgesehene Bohrung einrastet. Soll der Arretierungsbolzen 42 aus einer den Bügel sichernden Stellung verstellt
werden, so wird lediglich der Bügel 32 nach hinten gezogen.
Befindet sich der Arretierungsbolzen 42 in seiner zurückgezogenen bzw. entriegelten Stellung, so wird der Bügel 46 gedreht, so daß er dann in den Schlitz der Halterung 40 einrasten kann. Anstelle der in der Zeichnung dargestellten Feder bzw. Druckfeder kann in Verbindung mit dem Arretierungsbolzen 42 auch eine andere Feder in Verbindung mit der Anhängevorrichtung 30 verwendet werden.

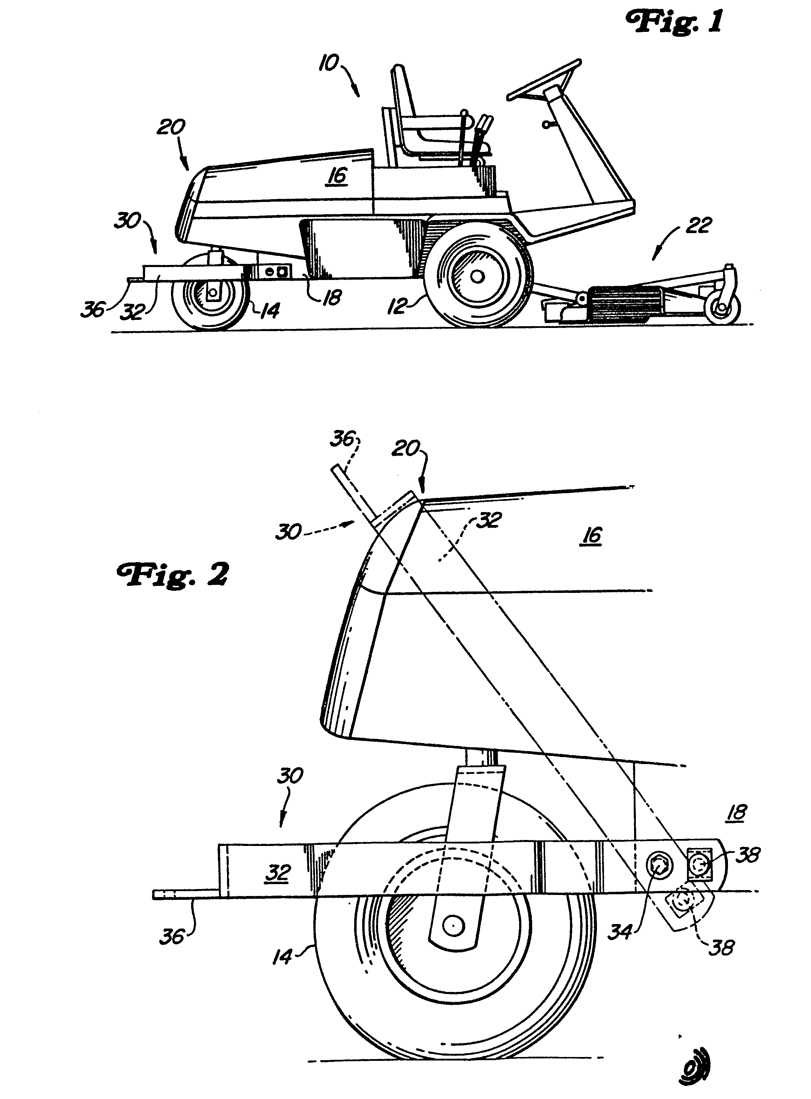

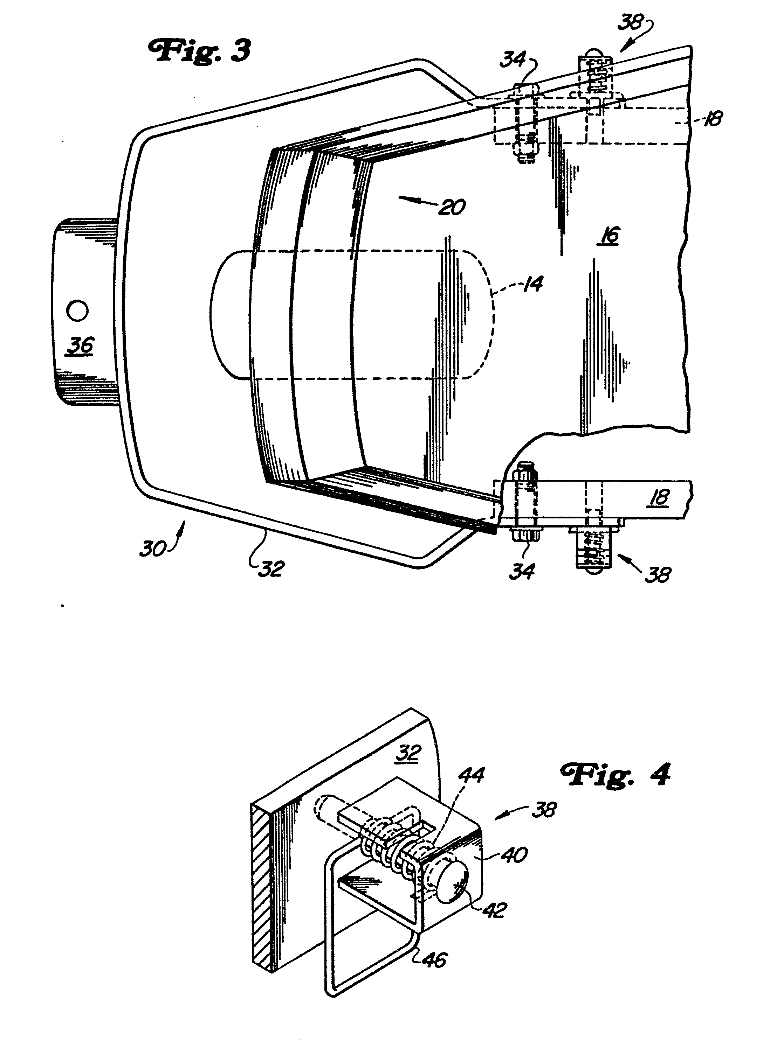

Wie aus den Figuren 2 und 3 hervorgeht, ist die Anhängevorrichtung 30 mindestens zwischen einer in Fig. 2 dargestellten Arbeitsstellung (horizontale Stellung) und einer Transportstellung (angehobene Stellung) verschwenkbar. In der horizontalen Lage der Anhängevorrichtung, die der Arbeitsstellung entspricht, rastet der Arretierungsbolzen 42 in die im Rahmen 18 vorgesehene Bohrung ein und setzt somit den Bügel 32 der Anhängevorrichtung 30 in der in Fig. 2 dargestellten Stellung fest. In der angehobenen bzw. in der Transportstellung liegt der Arretierungsbolzen gegen die untere Seite des Rahmens 18 an, so daß verhindert wird, daß der Bügel selbständig aus seiner Transportstellung in seine Arbeitsstellung verschwenkt. In der Transportstellung liegt die Innenseite des Bügels 46 gegen das Bogenstück der Rückwand 20 an, wobei das Bogenstück der Rückwand 20 auf dem Schwenkradius des Mittelstückes des Bügels 32 liegt. Hierzu wird gleichzeitig eine ratterfreie Verbindung zwischen dem äußeren Ende des Bügels 32 und der Rückwand 20 des Gehäuses 16 geschaffen. Um die Anhängevorrichtung 30 aus der in ausgezogenen Linien dargestellten Stellung gemäß Fig. 2 in die in gestrichelten Linien dargestellte Stellung zu verschwenken, wird der Arretierungsbolzen 42 mittels des Bügels 46 soweit zurückgezogen, daß er aus der Bohrung des Rahmens 18 gelangt und nunmehr der Bügel 32 um den Gelenkbolzen 34 verschwenken kann. Erreicht der Bügel 32 die in Fig. 2 dargestellte Transportstellung, so wird der Arretierungsbolzen 42 mittels der Feder 44 wieder nach innen verschoben, so daß der Arretierungsbolzen 42 gegen die Unterseite des Rahmens 18 anliegt und somit verhindert, daß die Anhängevorrichtung 30 abgesenkt werden kann. Um die Anhängevorrichtung 30 absenken zu können, muß der Arretierungsbolzen 42 mittels des Bügels 32 wieder nach hinten gezogen werden, so daß er die Unterseite des Rahmens freigibt. Nunmehr kann der Bügel 32 nach unten geschwenkt werden bis er seine horizontale Lage einnimmt, in der der Arretierungsbolzen 42 wieder in die Bohrung des Rahmens 18 einrastet und somit die Anhängevorrichtung 30 in der Arbeitsstellung festsetzt.

## Patentansprüche

1.  Anhängevorrichtung für ein Fahrzeug, das mit einem hinteren, einzigen Laufrad (14) und einem sich beiderseits des Laufrades (14) erstreckenden Rahmen (18) ausgerüstet ist, auf dem ein Gehäuse (16) angeordnet ist, dadurch gekennzeichnet, daß ein in etwa c-förmig ausgebildeter Bügel (32) mit seinen beiden gegenüberliegenden Enden das Laufrad (14) umgibt, gelenkig an den Rahmen (18) angeschlossen und wahlweise zwischen einer abgesenkten und einer angehobenen Stellung verstellbar sowie mittels einer Arretierungsvorrichtung (38) gegen Verschwenken festsetzbar ist.

2.  Anhängevorrichtung nach Anspruch 1, dadurch gekennzeichnet, daß am mittleren Teil des Bügels (32) eine sich nach außen erstreckende Kupplungsplatte (36) angeordnet ist.

3.  Anhängevorrichtung nach den Ansprüchen 1 und 4, dadurch gekennzeichnet, daß der mittlere Teil des Bügels (32) dem oberen hinteren Teil (Rückwand 20) des Gehäuses (16) angepaßt ist und in der angehobenen Stellung des Bügels (32) gegen diesen Teil kraftschlüssig anliegt.

4.  Anhängevorrichtung nach Anspruch 1, dadurch gekennzeichnet, daß die Arretierungsvorrichtung (38) einen gegen eine Feder (44) verstellbaren Arretierungsbolzen (42) aufweist.

0245803

Fig. 1

Fig. 2

**Fig. 3**

**Fig. 4**

Europäisches
Patentamt

**EUROPÄISCHER RECHERCHENBERICHT**

0245803

Nummer der Anmeldung

EP 87 10 6745

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | US-A-2 620 612 (RIDE-A-MOWER CO.)<br>* Spalte 4, Zeilen 51-65; Figuren 2,10 * | 1,2 | B 60 D 1/00<br>B 60 D 1/14 |
| Y | DE-C- 413 630 (COMPAGNIE DES FORGES ET ACIERIES DE LA MARINE & D'HOMECOURT)<br>* Seite 2, Zeilen 26-45,89-96; Figuren 6,7 * | 1,2 | |
| A | DE-C- 375 840 (O. NEUHAUS)<br>* Seite 2, Zeilen 55-76; Figuren 1-3 * | 1,3 | |
| A | US-A-1 423 084 (J. COTTON)<br>* Seite 2, Zeilen 14-56; Figuren 5-10 * | 1,4 | RECHERCHIERTE SACHGEBIETE (Int Cl 4) |
| A | US-A-3 998 471 (TERRAIN KING CORP.)<br>* Spalte 2, Zeilen 53-68; Figuren 1-3 * | 1,2 | B 60 D 1<br>A 01 D 53 |
| A | US-A-2 899 793 (SWISHER MOWER AND MACHINE CO.)<br>* Spalte 2, Zeilen 59-63; Figuren 1,2 * | 1 | |

Der vorliegende Recherchenbericht wurde für alle Patentansprüche erstellt.

| Recherchenort | Abschlußdatum der Recherche | Prüfer |
|---|---|---|
| DEN HAAG | 13-08-1987 | LINTZ C.H. |